# EUROPÄISCHE PATENTSCHRIFT

(11) **EP 0 489 023 B1**
(45) Veröffentlichungstag und Bekanntmachung des Hinweises auf die Patenterteilung: **04.08.1993**
(21) Anmeldenummer: 90910117.2
(22) Anmeldetag: 06.07.1990
(51) Int. Cl.: H04R 25/00

(54) **IM-OHR-HÖRGERÄT MIT SCHALL-AUSGLEICHSKANAL**
INTRA-AURAL HEARING AID WITH SOUND BALANCING CHANNEL
PROTHESE AUDITIVE INTRA-AURICULAIRE AVEC CANAL DE COMPENSATION DU SON

(30) Priorität: 23.08.1989 DE 3927797
(43) Veröffentlichungstag der Anmeldung: 10.06.1992
(73) Patentinhaber: TOPHOLM & WESTERMANN APS, DK-3500 Vaerloese (DK)
(72) Erfinder: TOEPHOLM, Jan, DK-2840 Holte (DK)
(74) Vertreter: Böhmer, Hans Erich, Dipl.-Ing.
(86) Internationale Anmeldenummer: EP9001091
(87) Internationale Veröffentlichungsnummer: WO9103139

(56) Entgegenhaltungen:
- EP-A- 0 040 259
- FR-A- 2 596 644

## Beschreibung

Die Erfindung betrifft ein Im-Ohr-Hörgerät für Schwerhörige oder Hörbehinderte, mit einer Ohrmulde, die ein Mikrofon, einen Verstärker, einen Hörer, ein Batteriefach mit Batterie und einen von innen nach außen führenden Schall- und Druck-Ausgleichskanal enthält, und mit einer Deckplatte abgeschlossen ist.

Ein derartiges Hörgerät ist beispielsweise aus der FR-A 1 - 25 96 644 bekannt.

Derartige Ausgleichskanäle sind für alle Im-Ohr-Hörgeräte erforderlich, um einen Schall- und Druckausgleich zwischen dem Inneren des Ohrkanals und dem Außenraum herzustellen, da sonst der Hörbehinderte beim Sprechen den Eindruck haben kann, daß das Ohr "zu" ist.

Diese Schall- und Druck-Ausgleichskanäle dienen gleichzeitig als eine Art Tiefpaßfilter, d.h. eine Rückführung von tiefen Frequenzen, wodurch die Verstärkung bei tiefen Frequenzen verringert wird. Dies ist oft erwünscht, weil die Hörverluste meist auf Bereiche höherer Frequenzen beschränkt sind.

Die eigene Sprache enthält meist einen höheren Anteil an niedrigeren Frequenzen. Somit muß eine Übertragung von Schall vom Kopf an das Hörgerät nach Möglichkeit vermieden werden.

Solche Schall- und Druck-Ausgleichskanäle hat man bisher oft durch eine zusätzliche Bohrung neben dem Schallkanal im Hörgerät hergestellt. Diese Bohrungen sind extrem schwierig und zeitaufwendig herzustellen.

Gemäß der FR-A1-25 96 644 sind zu diesem Zweck in der Spitze der Ohrmulde zusätzlich zu dem Schallausgangskanal Bohrungen angeordnet, die den Hohlraum zwischen Hörer und Ohrmuldenwand ausnützen, um über Kapillarröhrchen eine Verbindung mit der Außenwelt herzustellen. Solche Kapillarröhrchen werden auch Belüftung genannt.

Diese Kapillarröhrchen sind naturgemäß schwierig herzustellen, sei es durch Bohren, sei es beim Gießen der Ohrmulde.

Aufgabe der Erfindung ist es, ein Hörgerät der eingangs genannten Art zu schaffen, bei welchem der Schall- und Druckausgleichskanal wesentlich einfacher und damit weniger arbeits- oder kostenintensiv hergestellt werden kann. Außerdem soll sichergestellt werden, daß dann, wenn das Hörgerät in den Ohrkanal eingesetzt werden kann, es auch in diesem Fall möglich ist, einen Ausgleichskanal, d.h. eine Belüftung mindestens mit bestimmten Abmessungen vorzusehen.

Dies wird erfindungsgemäß dadurch erreicht, daß das eingangs genannte Im-Ohr-Hörgerät, wie im kennzeichnenden Teil des Ansprüchs 1 im einzelnen angegeben ist, einen speziellen zweiteiligen Schall- und Druck-Ausgleichskanal aufweist.

Weiterbildende Merkmale der Erfindung sind dem Anspruch 2 zu entnehmen.

Die Erfindung wird nunmehr anhand der beigefügten Zeichnungen im einzelnen näher beschrieben.

In den Zeichnungen zeigen:
- Fig. 1: schematisch eine Schnittansicht eines Im-Ohr-Hörgerätes gemäß der Erfindung;
- Fig. 2: eine schematische Perspektivansicht des Im-Ohr-Hörgerätes;
- Fig. 3,4 u.5: verschiedene Anordnungen von Schallausgangskanal und Ausgleichskanal;
- Fig. 6: eine Schnittansicht längs der Schnittlinie in Fig. 1;
- Fig. 7: eine weitere Schnittansicht längs der Schnittlinie in Fig. 1;
- Fig. 8A u.8B: eine Baueinheit, in der die Erfindung verwirklicht ist;
- Fig. 9: eine Teilschnittansicht des Schallausgangs des Hörgerätes
und
- Fig. 10: eine Ansicht des Schallausgangskanals und Ausgleichskanals von unten.

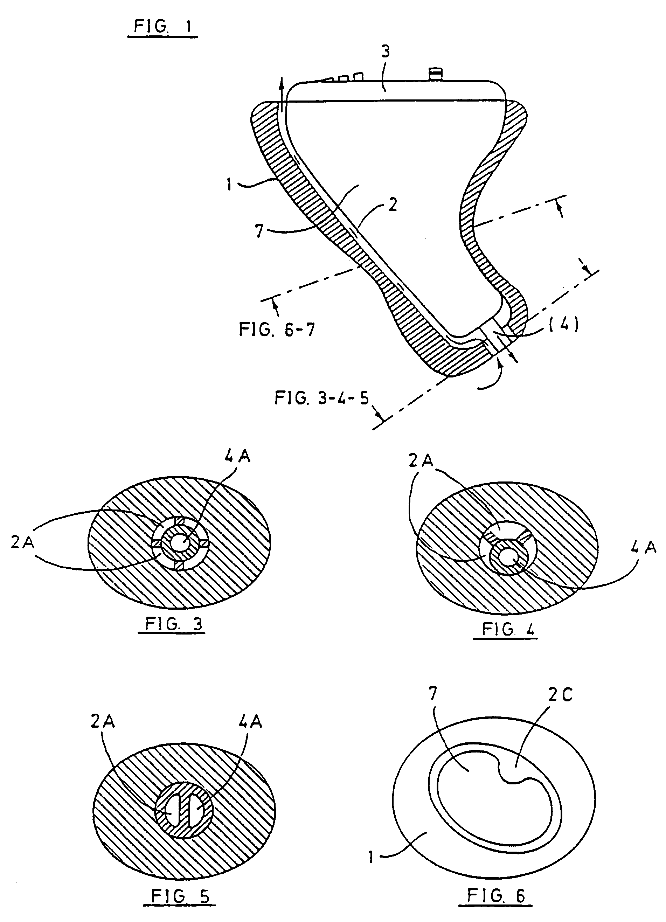

Fig. 1 zeigt rein schematisch eine Schnittansicht eines Im-Ohr-Hörgerätes 1 gemäß der Erfindung mit einem Ausgleichskanal 2, einer Deckplatte 3, an der (nicht gezeigt) verschiedene Bauelemente befestigt sind. Am unteren Ende des Hörgerätes befindet sich der Schallausgangskanal 4.

Während man bisher Schallausgangskanäle und Ausgleichskanäle getrennt voneinander ausgeführt hat, wird nunmehr erfindungsgemäß vorgeschlagen, diese beiden Kanäle im Ausgang zusammenzufassen.

Dies zeigt besonders deutlich zunächst Fig. 2, wo der Schallausgangskanal 4 mindestens teilweise von einem ersten Abschnitt des Ausgleichskanals 2A umgeben ist. Man erkennt ferner schematisch den Hörer 5, um den mindestens ein, vorzugsweise aber zwei Abschnitte des Ausgleichskanals 2B herumführen.

In den Figuren 3, 4 und 5 sind verschiedene Anordnungen des Schallausgangskanals 4A und verschiedener Einlässe 2A für den Ausgleichskanal gezeigt.

In Fig. 3 befindet sich der Schallausgangskanal 4A in der Mitte und der Ausgleichskanal 2A weist zum Beispiel vier um den Schallausgangskanal herum angeordnete Einlässe auf.

In Fig. 4 ist der Schallausgangskanal 4A asymmetrisch angeordnet und ist von z. B. drei Einlässen des Ausgleichskanals 2A nicht vollständig umgeben.

In Fig. 5 liegen Ausgleichskanal 2A und Schallausgangskanal 4A nebeneinander und weisen etwa halbkreisförmigen Querschnitt auf.

Durch diese Anordnungen sind der Schallausgangskanal und der Ausgleichskanal in Bezug auf die Ohrmulde eindeutig fixiert.

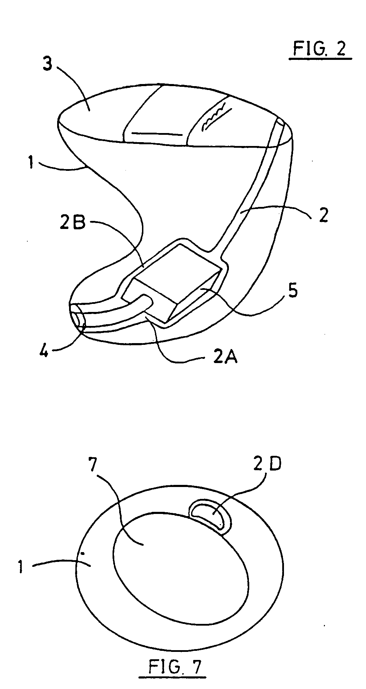

Betrachtet man einen Schnitt längs der Schnittlinie für Figuren 6 und 7 in Fig. 1, so sieht man, daß der Ausgleichskanal (oberhalb des Hörers) einmal durch eine durchgehende Vertiefung des inneren Gehäuses dargestellt werden kann, welche hier mit 2C bezeichnet ist. Genauso gut kann man aber den Ausgleichskanal 2D in die Otoplastik einformen. In jedem Fall ist aber der untere Abschnitt 2A des Ausgleichskanals unterhalb des Hörers in der in Fig. 1 und 2 gezeigten Weise angeordnet.

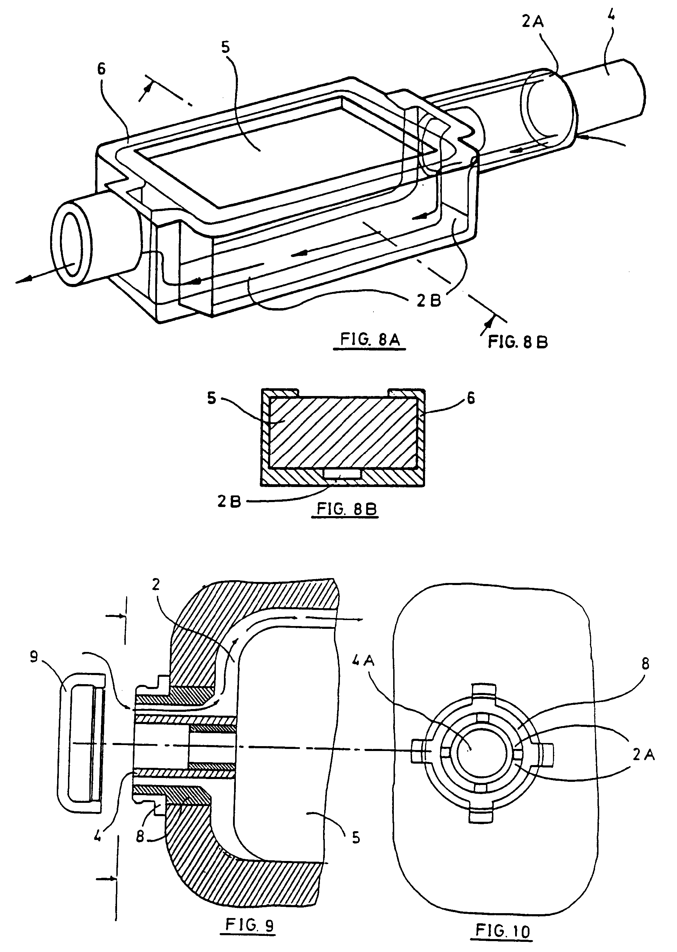

Eine besonders elegante Lösung einer Kombination von Schallausgangskanal und Ausgleichskanal zeigt die Baueinheit 6 in Fig. 8A und 8B. In dieser Baueinheit befindet sich der Hörer 5 und man erkennt auf der rechten Seite der Figur den Schallausgangskanal 4 und den Ausgleichskanal 2A, der sich innerhalb der Baueinheit 6 als Ausgleichskanal 2B fortsetzt. Dies ist im Prinzip auch bereits in Fig. 2 angedeutet.

Fig. 8B zeigt eine Schnittansicht längs der Schnittlinie in Fig. 8A. Der Hörer 5 ist von der Baueinheit 6, vorzugsweise in der dargestellten Form umgeben und gehalten. In dieser Baueinheit ist ein Ausgleichskanalabschnitt 2B eingeformt. Dieser Abschnitt ist zwar mit rechteckigem Querschnitt gezeigt, kann jedoch auch einen etwa halbkreisförmigen Querschnitt aufweisen.

Das untere Ende des Im-Ohr-Hörgerätes ist in Schnittansicht in Fig. 9 gezeigt. Man erkennt wiederum den Schallausgangskanal 4 und den Ausgleichskanal 2. In das untere Ende des Hörgerätes ist ein Cerumenfänger 8 eingesetzt, der durch eine Kappe 9 abgeschlossen werden kann.

Fig. 10 zeigt das untere Ende des Hörgerätes, ohne die Abdeckkappe, von unten. Man erkennt wiederum den Schallaustrittskanal 4A, den Ausgleichskanal 2A und den Cerumenfänger 8.

Durch diese neuartige konstruktive Anordnung des Ausgleichskanals in Verbindung mit dem Schallausgangskanal werden zusätzliche Bearbeitungsschritte zum Herstellen von Bohrungen oder Kanälen für den Ausgleichskanal überflüssig. Einerseits kann man mit der Baueinheit gemäß Fig. 8A und 8B und der Anordnung nach Fig. 9 den einen Teil des Ausgleichskanals in einfachster Weise darstellen, andererseits läßt sich dann der übrige Teil des Ausgleichskanals entsprechend Fig. 6 oder Fig. 7, einmal in der Otoplastik, zum anderen in dem eigentlichen Gerätegehäuse selbst in einfachster Weise herstellen.

Damit wird das gesamte Herstellungsverfahren für einen Ausgleichskanal wesentlich vereinfacht.

## Patentansprüche

1. Im-Ohr-Hörgerät für Schwerhörige oder Hörbehinderte, mit einer Ohrmulde, die ein Mikrofon, einen Verstärker, einen Hörer, ein Batteriefach mit Batterie und einen von innen nach außen führenden Schall- und Druck-Ausgleichskanal (2) enthält, und mit einer Deckplatte (3) abgeschlossen ist, dadurch gekennzeichnet, daß der Schall- und Druck-Ausgleichskanal (2) aus einem ersten, den vom Hörer kommenden Schallausgangskanal (4) mindestens teilweise umschließenden Teil (2 A) und einem zweiten, sich am Hörer vorbei in Richtung auf die Deckplatte (3) erstreckenden zweiten Teil (2 B) besteht, der mindestens zum Tell ein integraler Bestandteil einer Baueinheit (6) ist, die den Hörer (5) enthält und gleichzeitig den Übergang zwischen den beiden Teilen (2A, 2B) des Schall- und Druck-Ausgleichskanals bildet.

2. Hörgerät nach Anspruch 1, dadurch gekennzeichnet, daß der gemeinsame Ausgang für den Schall und den Schall- und Druck-Ausgleichskanal (2) am inneren Ende der Ohrmulde durch ein doppelwandiges Ausgangsteil (8) gebildet ist, das durch eine lösbar befestigte Cerumenfängerkappe (9) abgedeckt ist.

## Claims

1. In-the-ear hearing aid for persons with impaired or defective hearing with an ear mold containing a microphone, amplifier, earphone, battery compartment with batteries and a sound and pressure compensating channel (2) leading from inside to outside and covered by a cover plate (3), characterized in that the sound and pressure compensating channel (2) consists of a first part (2A) which at least partially encloses the sound outlet (4) from the earphone and of a second part (2B) which extends past the earphone in the direction of the cover plate (3), whereby this second part is at least partially an integral component of a unit (6) which contains the earphone (5) and simultaneously forms the transition between the two parts (2A, 2B) of the sound and pressure compensating channel.

2. Hearing aid in accordance with Claim 1, characterized in that the common outlet for the sound and the sound and pressure compensating channel (2) at the inner end of the ear mold is formed by a double-walled outlet part (A) which is covered by a detachable cerumen trap cap (9).

## Revendications

1. Prothèse auditive intra-auriculaire destinée aux personnes souffrant de surdité ou d'insuffisance auditive, comportant une cavité auriculaire abritant un microphone, un amplificateur, un écouteur, un compartiment à pile contenant une pile ainsi qu'un canal de compensation (2) du son et de la pression menant de l'intérieur vers l'extérieur, laquelle est fermée au moyen d'une plaque de recouvrement (3), caractérisée en ce que le canal de compensation (2) du son et de la pression se compose d'une première section (2 A) renfermant au moins partiellement le canal de sortie du son (4) venant de l'écouteur et d'une seconde section (2 B) qui se prolonge au-delà de l'écouteur en direction de la plaque de recouvrement (3) et qui fait au moins partiellement partie intégrante d'un ensemble (6) abritant l'écouteur (5) et formant en même temps un passage entre les deux parties (2A, 2B) du canal de compensation du son et de la pression.

2. Prothèse auditive selon la revendication 1, caractérisée en ce que la sortie commune pour le son et le canal de compensation du son et de la pression (2) est formée à l'extrémité intérieure de la cavité auriculaire par une pièce de sortie (8) à double paroi recouverte par un capuchon de piège à cérumen (9) fixé de manière amovible.
